# EUROPEAN PATENT APPLICATION

(11) **EP 2 538 637 A2**
(43) Date of publication of application: **26.12.2012**
(21) Application number: 12172182.3
(22) Date of filing: 15.06.2012
(51) Int. Cl.: H04L 29/08, H04L 29/06

(54) **Multi-path transmission control protocol proxy service**

(30) Priority: 22.06.2011 US 201113166308
(71) Applicant: Telefonaktiebolaget L M Ericsson (publ), 164 83 Stockholm (SE)
(72) Inventor: Tremblay, Richard, Rosemere, Québec J7A 4T3 (CA); Andersson, Per, Montreal, Québec H2Y 1Y8 (CA)
(74) Representative: HOFFMANN EITLE

(57) **Abstract**

A method of providing multi-path proxy services includes receiving a first transmission control protocol/internet protocol (TCP/IP) connection request from a client device at a proxy server, the connection request specifying that the client device is capable of establishing a multi-path TCP/IP connection, establishing a single path TCP/IP connection from the proxy server to a serving node in response to receiving the connection request, establishing first and second TCP/IP connections between the proxy server and the client device as multi-path TCP/IP sub-flows between the proxy server and the client device, and proxying communications between the client device and the serving node over the first and second TCP/IP connections as multipath TCP/IP sub-flows between the client device and the proxy server and the single path TCP/IP connection between the proxy server and the serving node.

## Description

### TECHNICAL FIELD

The present invention relates to computer networks. In particular, the present invention relates to systems and methods for providing proxy services in computer networks.

### BACKGROUND

In a typical client-server computing arrangement, a client device obtains computing services from a remote server device, such as a web server, a game server, an application server, etc. The client device typically sends a request to the server device at a network address associated with the server device. The request is processed by the server device, which sends a response back to the client device.

In some cases, it is desirable for the server device to be implemented as a group of serving nodes, and to provide a central location, such as a front-end node, for receiving requests from client devices and distributing the requests to available serving nodes, for example, to balance the processing load on the serving nodes.

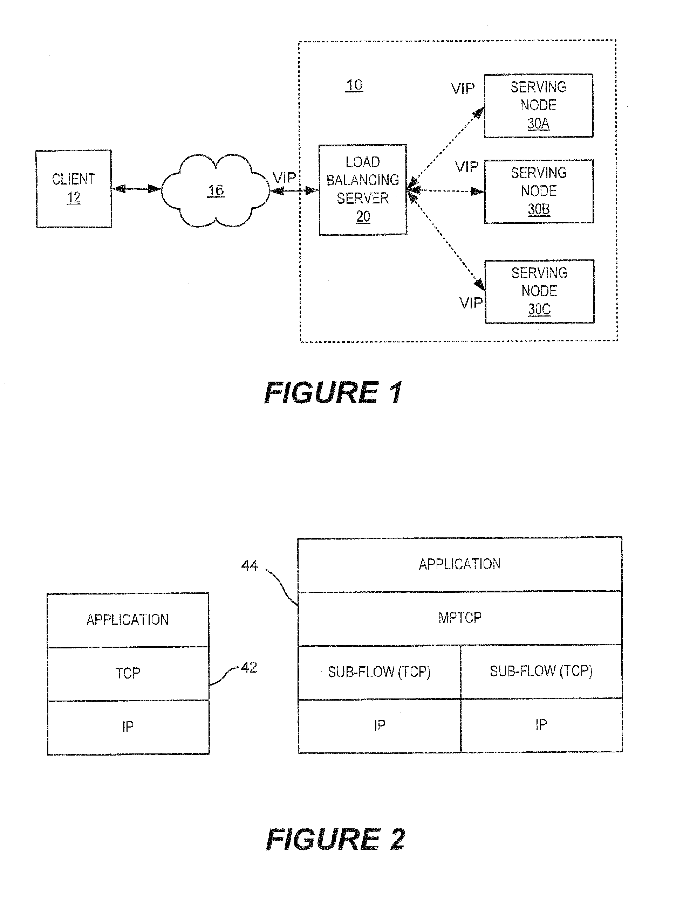

A conventional load balancing system 10 is illustrated in **Figure 1****.** The system 10 includes a front-end node 20, which may be a load balancing server, and a number of serving nodes 30A-30C. The system 10 is reachable by a client device 12 through a communication network 16, which may be a private network, a public network, or a combination of private/public networks. For example, in a TCP/IP (transmission control protocol//internet protocol) based network, the system 10 is reachable via a number of Virtual IP (VIP) addresses advertised by the front-end load balancing node. The serving nodes 30A-30C are also configured to process IP packets addressed to these VIP addresses. In addition, the serving nodes 30A-30C are configured to handle the same TCP port number within the configured IP addresses.

A tunnel is setup between the front-end node 20 and each serving node 30A-30C. Although the service is provided by a set of serving nodes 30A-30C, the client device 12 using the service sees the system 10 as a single entity that is reachable via a VIP address and a service port.

In an IP network, endpoints are often connected by multiple paths through the communication network 16. However, TCP restricts communications to a single path for each transport connection. To alleviate this restriction, Multi-path TCP (MPTCP) has been proposed as a set of extensions for TCP that implements a multi-path transport within a transport connection. The multi-path transport mechanism is transparent (to a certain extent) to the applications.

Multi-path TCP relies upon standard TCP sessions, termed "sub-flows", to provide the underlying transport paths. MPTCP carries MPTCP-specific information in a TCP-compatible manner. **Figure 2** illustrates layers in a conventional TCP protocol stack 42 and an MPTCP protocol stack 44. As shown in **Figure 2****,** in a conventional TCP protocol stack, a TCP layer resides above an IP layer and below an application layer. (As will be appreciated, in a protocol stack, each layer provides services, such as routing, encapsulation, segmentation, encryption, etc., to higher layers and uses services of lower layers in the stack). In the MPTCP stack 44, multiple TCP subflows and associated IP connections can support a single MPTCP layer. That is, a single MPTCP connection can use more than one TCP sub-flow for communicating data between applications.

Since MPTCP uses regular TCP streams as its transport mechanism, an MPTCP connection also begins as a single TCP stream. After the first TCP stream is established, one device (or endpoint) signals to the other device/endpoint that it supports MPTCP and wishes to use it on the established connection. As such, a TCP Option is used to transmit this information, since this is the established mechanism for indicating additional functionality on a TCP session. Additional signaling is required during the operation of an MPTCP session, such as that for reassembly for multiple sub-flows, and for informing the other endpoint about other available addresses.

Before a client attempts to connect with a server, the server must first bind to a port to open it up for connections, referred to as a passive open. Once the passive open is established, a client may initiate an active open. To establish a connection, the active open is performed by the client sending a SYN packet to the server, which responds with a SYN/ACK response. The client then responds to the SYN/ACK with an ACK response. In the handshaking process, sequence numbers are set for transmissions to and from the server.

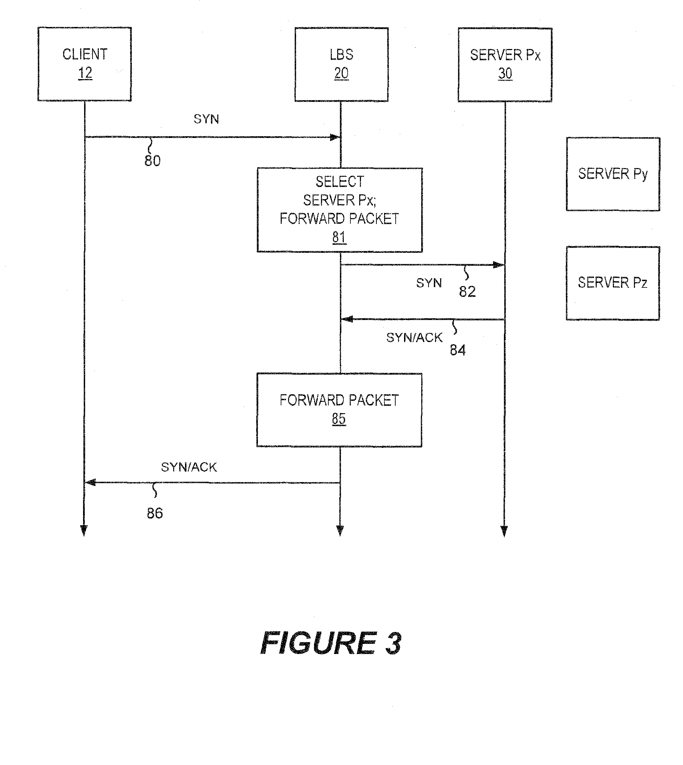

In a conventional TCP connection, connection initiation between a client and a serving node via a load balancing proxy server node is performed as shown in **Figure 3****.** As shown therein, the client 12 attempts to establish a connection with a server P. In actuality, the server P is implemented as a plurality of serving nodes Px, Py, Pz in a server farm. The client 12 sends a SYN packet 80 to the IP address associated with the server P. The SYN packet 80 is received and processed by a load balancing server 20, which analyzes the SYN packet and chooses a serving node Px from among the available serving nodes using some criterion and forwards the SYN command 82 to the selected serving node Px (Block 81). For example, the load balancing server 20 may choose to forward the SYN command to the serving node Px based on the buffer fullness, processor utilization, queue length or other metric of the serving nodes.

In response, the serving node 30 send a SYN/ACK packet 84 back to the load balancing server 20, which forwards the SYN/ACK packet 86 to the client device 12 (Block 85). Finally, the client sends an ACK (not shown) back to the server 30.

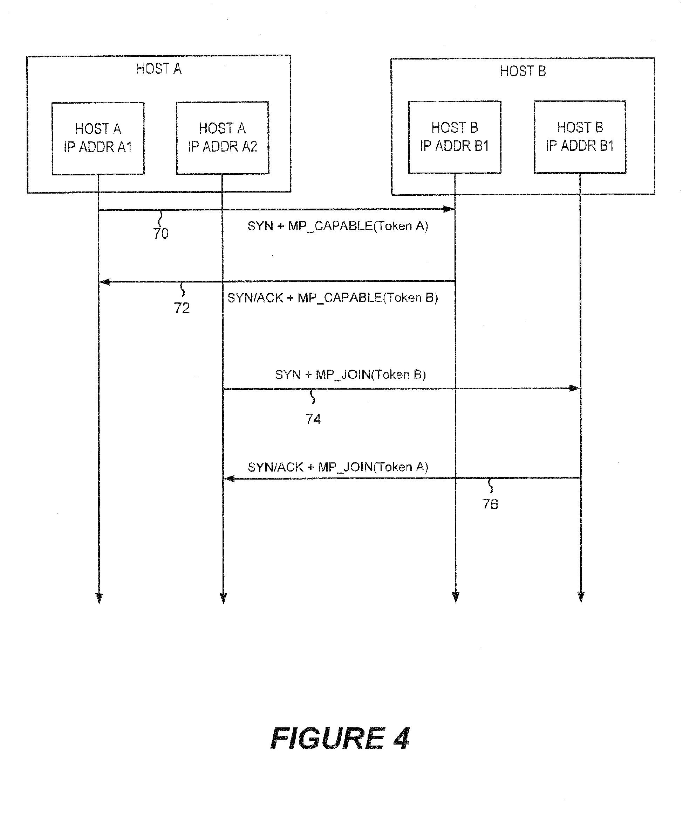

Connection initiation between two hosts in a hypothetical MPTCP capable system is shown in **Figure 4****.** Referring to **Figure 4****,** two hosts (Host A and Host B) initiate a connection with a SYN, SYN/ACK exchange on a single path. In the example shown in **Figure 4****,** each host is assigned multiple IP addresses. Host A sends a SYN packet 70 from IP address A1 to Host B at IP address B1. The SYN packet 70 contains the Multi-path Capable (MP_CAPABLE) TCP option. This option declares its sender is capable of performing multi-path TCP and wishes to do so on this particular connection. The SYN packet also includes a token (Token A) that identifies the session with Host B and that is used when adding additional sub-flows to the connection. This token is generated by and unique to the sender and has local meaning only.

Host B replies from IP address B1 with a SYN/ACK packet 72 that also includes the MP_CAPABLE option and a second token (Token B).

The MP_CAPABLE option is only present in packets with the SYN flag set, and is only used in the first TCP session of a connection.

Once an MPTCP connection has been initiated with an MP_CAPABLE exchange, further sub-flows can be added to the connection. Hosts have knowledge of their own address(es), and can become aware of the other host's addresses. Using this knowledge, a host can initiate a new sub-flow over a currently unused pair of addresses. The protocol permits either endpoint of a connection to initiate the creation of a new sub-flow.

A new sub-flow is started as a normal TCP SYN/ACK exchange, except that the Join Connection (MP_JOIN) TCP option is used in the SYN packets to identify the connection to be joined by the new sub-flow. The receiver token sent is the other host's locally unique connection token, which was included in the MP_CAPABLE option during connection establishment.

Referring still to **Figure 4****,** Host A sends a SYN packet 74 with the MP_JOIN option from IP address A2 to Host B at IP address B2. It will be appreciated that the SYN+MP_JOIN packet could be sent from Host A at IP address A1 or to Host B at IP address B1. The SYN+MP_JOIN packet 74 includes Token B, which was supplied by Host B in the earlier SYN/ACK exchange. Host B responds with a SYN/ACK+MP_JOIN packet 76 including token A, which was previously supplied by Host A. After establishment of the second sub-flow, TCP packets can be sent between Host A and Host B on either sub-flow. The packets can be re-assembled by the hosts in proper order using sub-flow specific sequence numbers.

### SUMMARY

A method of providing multi-path proxy services according to some embodiments includes receiving a first transmission control protocol/internet protocol (TCP/IP) connection request from a client device at a proxy server, the connection request specifying that the client device is capable of establishing a multi-path TCP/IP connection, establishing a single path TCP/IP connection from the proxy server to a serving node in response to receiving the connection request, establishing first and second TCP/IP connections between the proxy server and the client device as multi-path TCP/IP sub-flows between the proxy server and the client device, and proxying communications between the client device and the serving node over the first and second TCP/IP connections as multipath TCP/IP sub-flows between the client device and the proxy server and the single path TCP/IP connection between the proxy server and the serving node.

The method further includes receiving a multipath connection request from the client device, and the second TCP/IP connection may be established in response to the multipath connection request from the client device.

The first connection request may specify a first IP address for the client device and the multipath connection request may specify a second IP address for the client device that is different from the first IP address.

The first connection request may be directed to a first IP address for the proxy serving node and the multipath connection request may be directed to a second IP address for the proxy server that is different from the first IP address.

The first connection request may include a SYN+MP_CAPABLE message and the multipath connection request may include a SYN+MP_JOIN message.

The SYN+MP_CAPABLE message may include a first token that identifies multipath communications with the client device, and the method may further include responding to the SYN+MP_CAPABLE message with a SYN/ACK+MP_CAPABLE message that includes a second token that is different from the first token and that identifies multipath communications with the proxy server.

The SYN+MP_JOIN message may include the second token and the method may further include responding to the SYN+MP_ JOIN message with a SYN/ACK+MP_ JOIN message that includes the first token.

Packets received over the first and second TCP/IP connections between the client device and the proxy server may be combined for communication over the single path TCP/IP connection between the proxy server and the serving node.

The method may further include sending a multipath connection request from the proxy server to the client device, the multipath connection request requesting the second TCP/IP connection with the client device, and the second TCP/IP connection may be established in response to the multipath connection request from the proxy server.

A computer program product for providing multi-path proxy services includes a tangible computer readable storage medium having computer readable program code embodied in the medium. The computer readable program code includes computer readable program code configured to receive a first transmission control protocol/internet protocol (TCP/IP) connection request from a client device at a proxy server, the connection request specifying that the client device is capable of establishing a multi-path TCP/IP connection, computer readable program code configured to establish a single path TCP/lP connection from the proxy server to a serving node in response to receiving the connection request, computer readable program code configured to establish first and second TCP/IP connections between the proxy server and the client device as multi-path TCP/IP sub-flows between the proxy server and the client device, and computer readable program code configured to proxy communications between the client device and the serving node over the first and second TCP/IP connections as multipath TCP/IP sub-flows between the client device and the proxy server and the single path TCP/IP connection between the proxy server and the serving node.

A proxy server according to some embodiments includes a communications interface configured to communicate with a client device and with at least one serving node, and a processor configured to receive a first transmission control protocol/internet protocol (TCP/IP) connection request from the client device, the connection request specifying that the client device is capable of establishing a multi-path TCP/IP connection, configured to establish a single path TCP/IP connection to the serving node in response to receiving the connection request, configured to establish first and second TCP/IP connections with the client device as multi-path TCP/IP sub-flows, and configured to proxy communications between the client device and the serving node over the first and second TCP/IP connections as multipath TCP/IP sub-flows with the client device and the single path TCP/IP connection with the serving node.

Other systems, methods, and/or computer program products according to embodiments of the invention will be or become apparent to one with skill in the art upon review of the following drawings and detailed description. It is intended that all such additional systems, methods, and/or computer program products be included within this description, be within the scope of the present invention, and be protected by the accompanying claims.

### BRIEF DESCRIPTION OF THE DRAWINGS

The accompanying drawings, which are included to provide a further understanding of the invention and are incorporated in and constitute a part of this application, illustrate certain embodiment(s) of the invention. In the drawings:

Figure 1 illustrates a conventional load balancing system.

Figure 2 illustrates layers in a conventional TCP protocol stack and a multi-path TCP protocol stack.

Figure 3 illustrates connection initiation between a client and a serving node via a load balancing proxy server node.

Figure 4 illustrates initiation of a multi-path TCP connection.

Figure 5 illustrates a multi-path TCP capable load balancing system in accordance with some embodiments.

Figures 6-11 illustrate initiation of a proxied multi-path TCP connection in accordance with some embodiments of the present invention.

Figure 12 is a schematic block diagram of a load balancing proxy server in accordance with some embodiments of the present invention;

Figure 13 is a flowchart illustrating operations according to some embodiments of the present invention.

### DETAILED DESCRIPTION

Embodiments of the present invention now will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Before the MPTCP extensions are finalized and all TCP IP stacks provide the multi-path capabilities, there is a need to provide a multi-path proxy service. Not having such a proxy would necessitate the modifications to all load balanced applications in order to fully use the enhanced capabilities provided by multi-path TCP.

Some embodiments utilize the proposed MP-TCP extensions for multi-path capability to make a VIP service available through multi-homing (multiple IP addresses). No modifications to the server node IP stack may be required to implement this capability, and the multi-path nature of communications with a client may be transparent to applications on the server nodes.

Adding a multi-path TCP proxy would maintain this high traffic while increasing the bandwidth and improving the resiliency of the traffic towards the client nodes by taking full advantage of the multipath TCP capabilities, again with no modifications to the load balanced applications. In order to fully understand the problem, the next paragraphs provide a description of the system where load distribution and multi-path TCP proxy will be used.

This multi-path proxy service would make the TCP connection look like a standard single path TCP connection to one end point while still providing the multi-path (multi-homing) capability to the other endpoint. In the context of a Load Balancing node distributing traffic to a number of processing nodes, it should be possible to provide an Internet Service (i.e. web server) through the multi-homing feature enabled with the multi-path TCP feature, while not requiring modifications to the actual processing nodes.

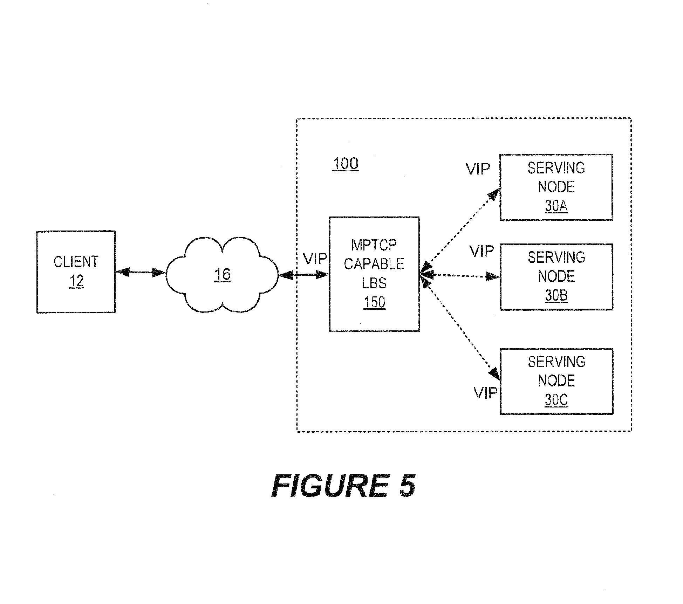

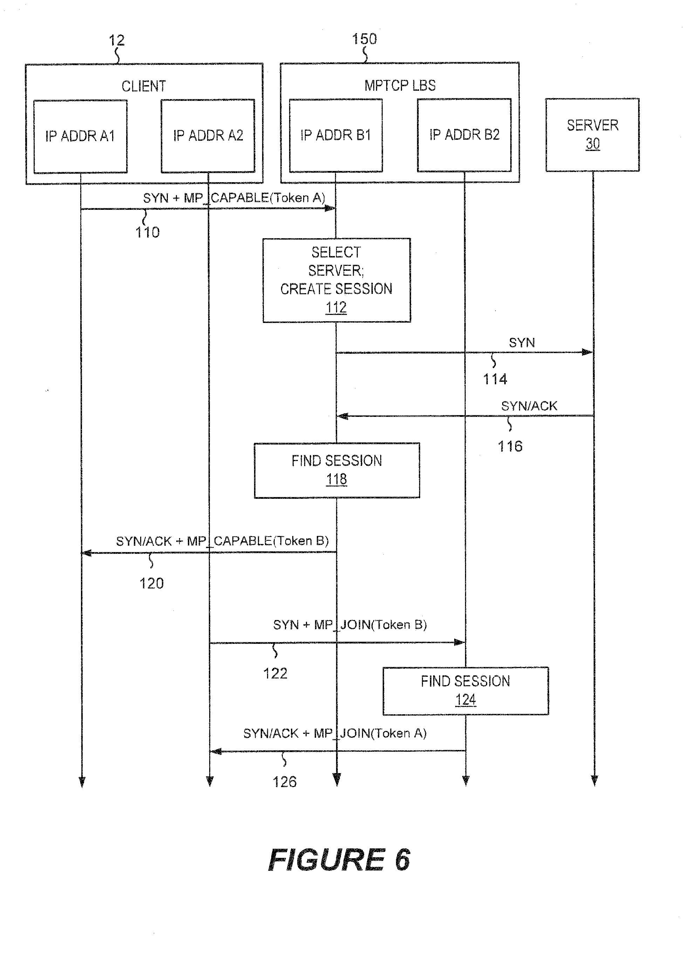

A system 100 including an MCTCP-capable load balancing proxy server 150 is illustrated in **Figure 5**, and connection initiation using multi-path TCP between a client device and a proxied server according to some embodiments is illustrated in **Figure 6****.**

Referring to **Figure 5****,** the system 100 includes an MPTCP-capable load balancing server 150 and a number of serving nodes 30A-30C. The system 100 is reachable by a client device 12 through a communication network 16, which may be a private network, a public network, or a combination of private/public networks. For example, in a TCP/IP (transmission control protocol//internet protocol) based network, the system 100 is reachable via a number of Virtual IP (VIP) addresses advertised by the front-end load balancing node. The serving nodes 30A-30C are also configured to process IP packets addressed to these VIP addresses. In addition, the serving nodes 30A-30C are configured to handle the same TCP port number within the configured IP addresses.

A tunnel is setup between the load balancing server 150 and each serving node 30A-30C. Although the service is provided by a set of serving nodes 30A-30C, the client device 12 using the service sees the system 100 as a single entity that is reachable via a VIP address and a service port.

One problem in providing services that offer a multi-path capability within a load balancing system is to make the service appears as a multi-path TCP to a single server for the users of the service on the Internet, while at the same time making the service appear as a normal TCP connection to the providers of the service (i.e., the server nodes).

In order to provide multi-path capable service according to some embodiments, the load balancing server 150 will expose the multi-path capability to the communications network 16. For each multi-path connection request arriving from the communications network 16 for a specific service, the load balancing server 150 will terminate that connection and open a single connection to one of the serving nodes 30A-30C. Other TCP connections not using the MPTCP capability may be processed as a standard load balancing server would do.

Some embodiments of the present invention provide a system that offers multi-path TCP on one end (i.e., to client devices 12) while establishing a single TCP stream on the other end (i.e., with the serving node 30A-30C), in a transparent way. To do so, a front-end node (i.e., a proxy), such as the load balancing server 150, is placed between the client devices 12 and the serving nodes 30A-30C. The load balancing server 150 acts like a multiplexer for multiple streams. That is, the load balancing server 150 establishes multiple TCP streams with a client device 12 and multiplexes them onto a single TCP stream with one of the serving nodes 30A-30C. Accordingly, the load balancing server 150 may transparently bridge two different protocols (TCP and MP-TCP).

Referring to **Figure 6****,** an MPTCP capable client device 12 and an MPTCP capable load balancing server 150 each have multiple IP addresses. The client device 12 is associated with IP addresses A1 and A2, while the load balancing server 150 is associated with IP addresses B1 and B2.

The client device 12 sends a SYN packet 110 from IP address A1 to the load balancing server 150 at IP address B1. The SYN packet 70 contains the Multi-path Capable (MP_CAPABLE) TCP option. The SYN packet also includes a token (Token A) that identifies the session with the load balancing server 150 and that is used when adding additional sub-flows to the connection.

The load balancing server 150 examines the SYN packet 110 and determines that it should be forwarded to a serving node managed by the load balancing server 150. The load balancing server 150 selects a server 30 from among a group of available servers and establishes a single path TCP connection with the selected server 30 by sending a SYN packet 114 (without the MP_CAPABLE option) to the server 30. The server 30 replies to the load balancing server 150 with a SYN/ACK packet 116. Upon receipt of the SYN/ACK packet 116, the load balancing server 150 associates the SYN/ACK packet 116 with the appropriate client session (Block 118) and sends a SYN/ACK packet 120 back to the client device 12 at IP address A1 with the MP_CAPABLE option and a second unique token (Token B).

Once an MPTCP connection has been initiated with an MP_CAPABLE exchange, further sub-flows can be added to the connection. In particular, the client 12 sends a SYN packet 122 with the MP_JOIN option from IP address A2 to the load balancing server 150 at IP address B2. The SYN+MP_JOIN packet 122 includes Token B, which was supplied by the load balancing server 150 in the earlier SYN/ACK exchange. The load balancing server 150 associates the SYN+MP_JOIN packet 122 with the existing session with the server 30 (Block 124) and responds with a SYN/ACK+MP_JOIN packet 126 including token A, which was previously supplied by the client device 12. After establishment of the second sub-flow, TCP packets can be sent between the client device 12 and the load balancing server 150 on either sub-flow. The packets can be re-assembled by the hosts in proper order using sub-flow specific sequence numbers.

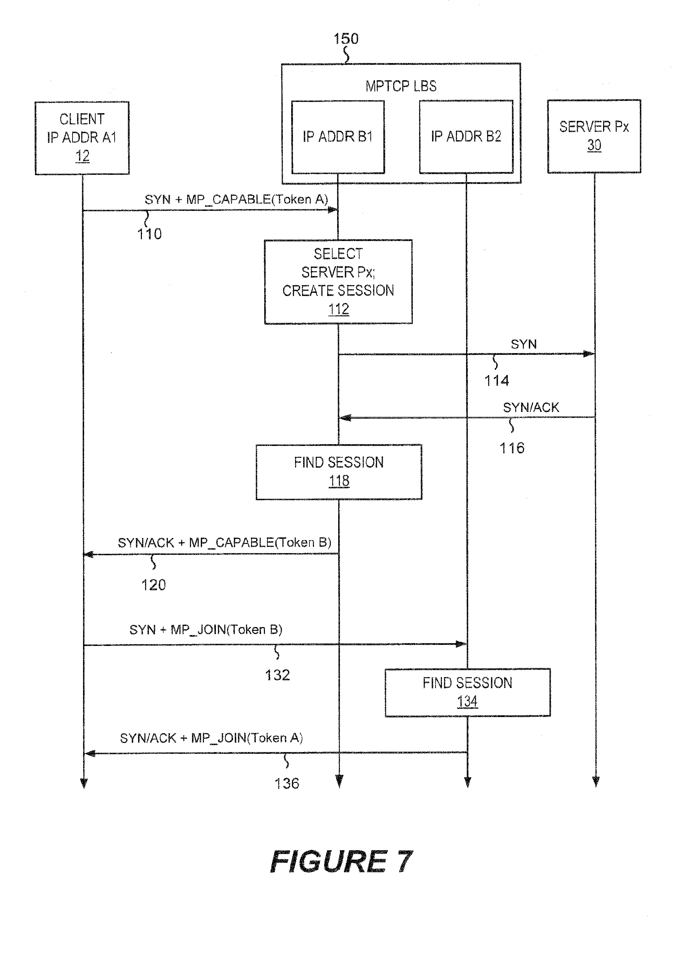

**Figure 7** illustrates initiation of an MPTCP session between a client device 12 and a load balancing server 150 in which the client device 12 is associated with only a single IP address (IP Address A1), while the load balancing server 150 is associated with multiple IP addresses. In **Figure 7****,** operations 110 to 120 of establishing the initial TCP session between the client 12 and the server 30 are similar to the operations illustrated in **Figure 6****,** and need not be described again.

Once the initial TCP session has been initiated, the client 12 sends a SYN packet 132 with the MP_JOIN option from IP address A1 to the load balancing server 150 at IP address B2. The SYN+MP_JOIN packet 132 includes Token B, which was supplied by the load balancing server 150 in the earlier SYN/ACK exchange. The load balancing server 150 associates the SYN+MP_JOIN packet 132 with the existing session with the server 30 (Block 134) and responds with a SYN/ACK+MP_JOIN packet 136 including token A.

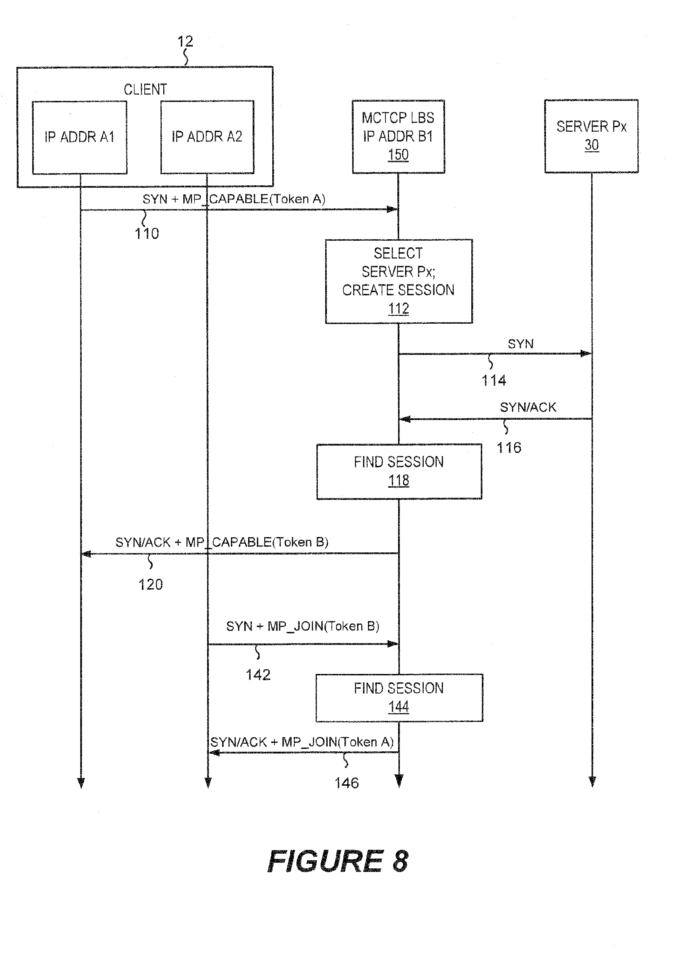

**Figure 8** illustrates initiation of an MPTCP session between a client device 12 and a load balancing server 150 in which the client device 12 is associated with multiple IP addresses, while the load balancing server 150 is associated with a single IP address. In **Figure 8**, operations 110 to 120 of establishing the initial TCP session between the client 12 and the server 30 are similar to the operations illustrated in **Figure 6**, and need not be described again.

Once the initial TCP session has been initiated, the client 12 sends a SYN packet 142 with the MP_JOIN option from IP address A2 to the load balancing server 150 at IP address B1. The SYN+MP_JOIN packet 142 includes Token B, which was supplied by the load balancing server 150 in the earlier SYN/ACK exchange. The load balancing server 150 associates the SYN+MP_JOIN packet 142 with the existing session with the server 30 (Block 144) and responds with a SYN/ACK+MP_JOIN packet 146 including token A.

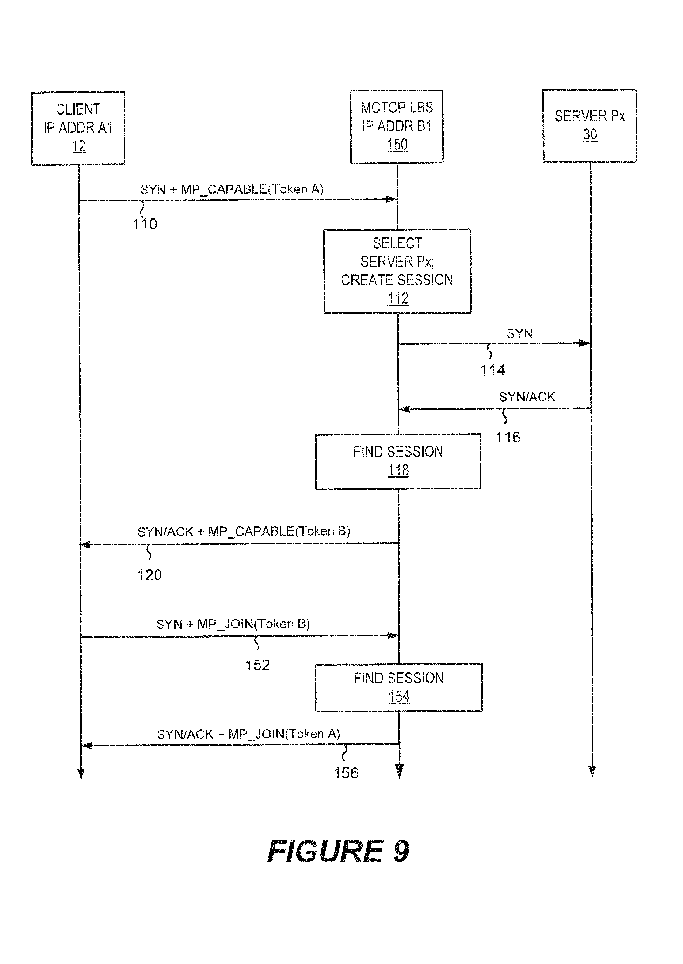

**Figure 9** illustrates initiation of an MPTCP session between a client device 12 and a load balancing server 150 in which both the client device 12 and the load balancing server 150 are associated with single IP addresses. In Figure 9, operations 110 to 120 of establishing the initial TCP session between the client 12 and the server 30 are similar to the operations illustrated in **Figure 6****,** and need not be described again.

Once the initial TCP session has been initiated, the client 12 sends a SYN packet 152 with the MP_JOIN option to the load balancing server 150 at IP address B1. The SYN+MP_JOIN packet 152 includes Token B, which was supplied by the load balancing server 150 in the earlier SYN/ACK exchange. The load balancing server 150 associates the SYN+MP_JOIN packet 152 with the existing session with the server 30 (Block 154) and responds with a SYN/ACK+MP_JOIN packet 156 including token A.

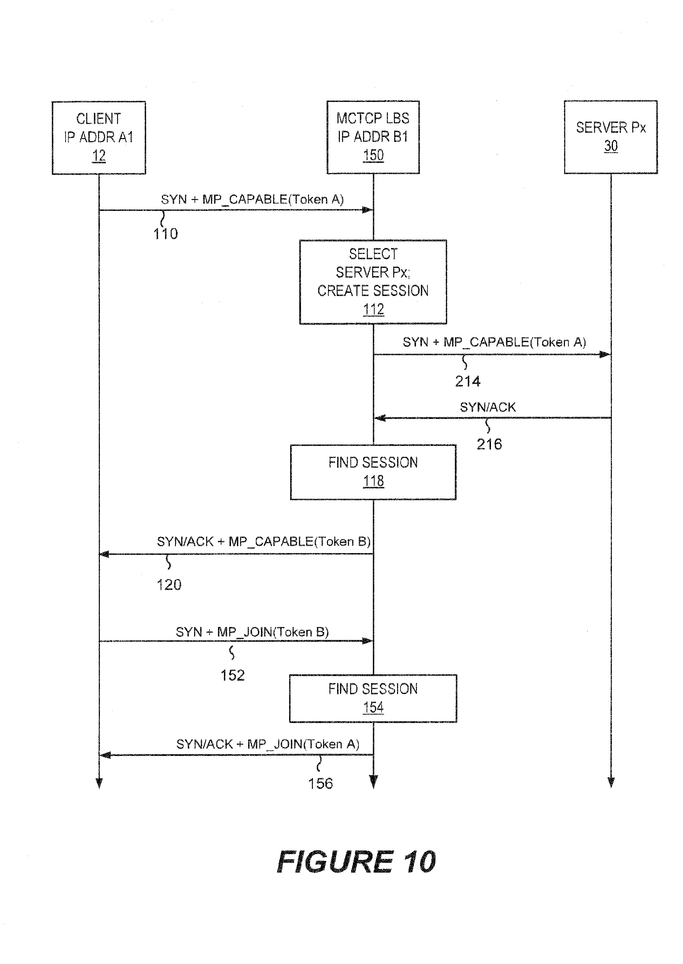

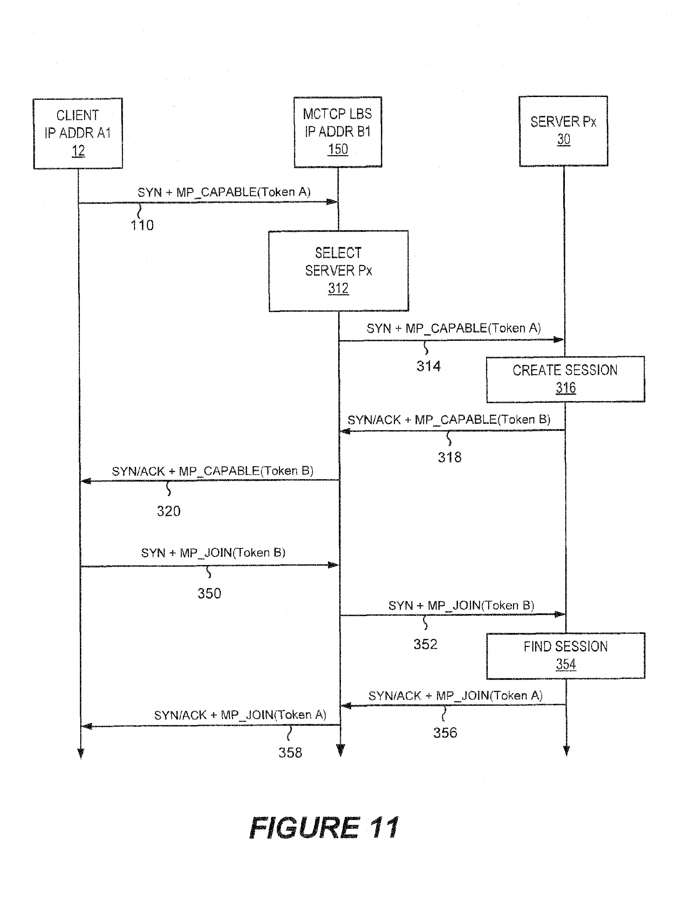

**Figures 10** **and** **11** illustrate operations according to some embodiments in which the MP_CAPABLE option is passed through to the server 30 by the load balancing server 150. **Figure 10** is similar to **Figure 9****,** except that after creating the session in Block 112, the load balancing server 150 sends a SYN+MP_CAPABLE command 214 to the server 30. In the embodiments of **Figure 10****,** the server 30 checks its capabilities and determines that it does not support the MP_CAPABLE option. The server therefore returns a SYN/ACK 216 without the MP_CAPABLE option. The load balancing server 150 then handles subsequent MPTCP communications on behalf of the server 30 as described above.

**Figure 11** is similar to **Figure 10****,** except that the LBS selects a server at Block 312 and forwards the SYN+MP_CAPABLE command 314 to the server 30. Upon receiving the SYN+MP_CAPABLE command 314, the server 30 checks its capabilities and determines that it does support the MP_CAPABLE option. The server therefore creates a session (Block 316) and returns a SYN/ACK+MP_CAPABLE command 318 to the load balancing server 150, which sends a SYN/ACK+MP_CAPABLE command 320 to the client 12.

Upon receipt of a SYN+MP_JOIN command 350 from the client 12, the load balancing server 150 forwards the SYN+MP_JOIN command 352 to the server 30, which finds a session (Block 354) and returns a SYN/ACK+MP_JOIN command 356 to the load balancing server 150, which forwards the SYN/ACK+MP_JOIN command 358 to the client 12.

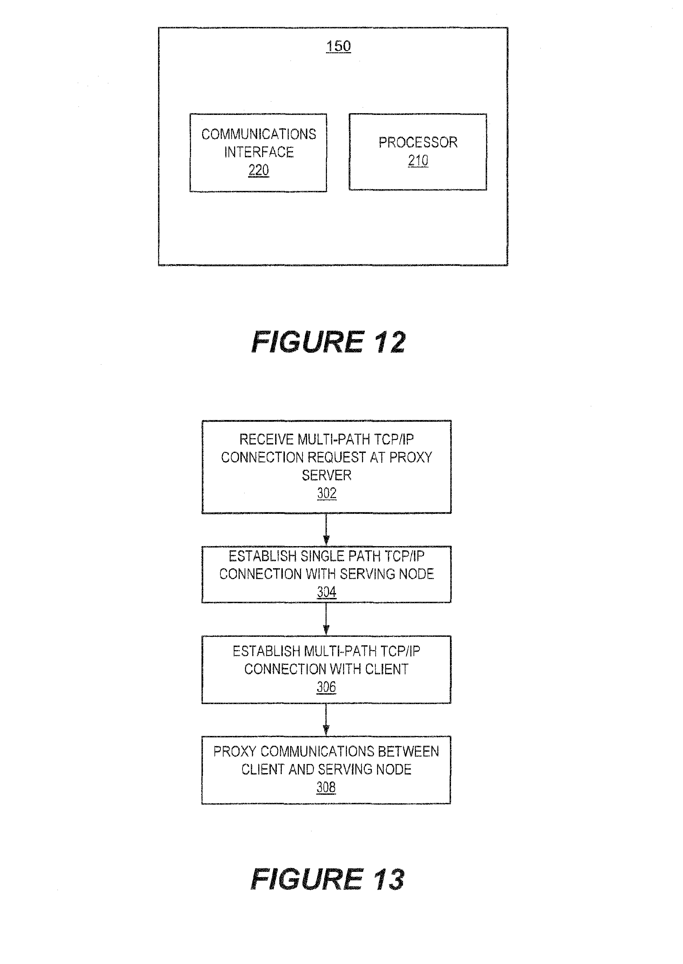

**Figure 12** is a schematic block diagram of a load balancing proxy server in accordance with some embodiments. As shown therein, the load balancing server 150 includes a processor 210 and a communications interface 220. The processor may be a general purpose microprocessor. The communications interface 220 permits the load balancing server to communicate with client devices 12 over the network 14, as well as with serving nodes 30A-30C (Figure 5). The processor 210 is configured to receive a first TCP/IP connection request from a client device 12 via the communication interface 220 that specifies that the client device is capable of establishing a multi-path TCP/IP connection. The processor 210 is further configured to establish a single path TCP/IP connection to the serving node in response to receiving the connection request, and to establish first and second TCP/IP connections with the client device as multi-path TCP/IP sub-flows. The load balancing server 150 can thereafter proxy communications between the client device and the serving node over the first and second TCP/IP connections as multipath TCP/IP sub-flows with the client device and the single path TCP/IP connection with the serving node.

**Figure 13** is a flowchart illustrating operations according to some embodiments. Referring to **Figure 13****,** methods of providing multi-path proxy services according to some embodiments include receiving a first transmission control protocol/internet protocol (TCP/IP) connection request from a client device at a proxy server, such as a load balancing server 150 (Block 302). The connection request specifies that the client device is capable of establishing a multi-path TCPIIP connection. A single path TCP/IP connection is established from the proxy server to a serving node in response to receiving the connection request (Block 304), and first and second TCP/IP connections are established between the proxy server and the client device as multi-path TCP/IP sub-flows between the proxy server and the client device (Block 306). The methods further include proxying communications between the client device and the serving node over the first and second TCP/IP connections as multipath TCP/IP sub-flows between the client device and the proxy server and the single path TCP/IP connection between the proxy server and the serving node (Block 308).

As will be appreciated by one of skill in the art, the present invention may be embodied as a method, data processing system, and/or computer program product. Furthermore, the present invention may take the form of a computer program product on a tangible computer usable storage medium having computer program code embodied in the medium that can be executed by a computer. Any suitable tangible computer readable medium may be utilized including hard disks, CD ROMs, optical storage devices, or magnetic storage devices.

Some embodiments of the present invention are described herein with reference to flowchart illustrations and/or block diagrams of methods, systems and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the present invention may be written in an object oriented programming language such as Java® or C++. However, the computer program code for carrying out operations of the present invention may also be written in conventional procedural programming languages, such as the "C" programming language. The program code may execute entirely on the user's computer, partly on the user's computer, as a stand alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method of providing multi-path proxy services, comprising:
receiving a first transmission control protocol/internet protocol (TCP/IP) connection request from a client device at a proxy server, the connection request specifying that the client device is capable of establishing a multi-path TCP/IP connection;
establishing a single path TCP/IP connection from the proxy server to a serving node in response to receiving the connection request;
establishing first and second TCP/IP connections between the proxy server and the client device as multi-path TCP/IP sub-flows between the proxy server and the client device; and
proxying communications between the client device and the serving node over the first and second TCP/IP connections as multipath TCP/IP sub-flows between the client device and the proxy server and the single path TCP/IP connection between the proxy server and the serving node.

2. The method of Claim 1, further comprising receiving a multipath connection request from the client device, wherein the second TCP/IP connection is established in response to the multipath connection request from the client device.

3. The method of Claim 2, wherein the first connection request specifies a first IP address for the client device and the multipath connection request specifies a second IP address for the client device that is different from the first IP address.

4. The method of Claim 2, wherein the first connection request is directed to a first IP address for the proxy serving node and the multipath connection request is directed to a second IP address for the proxy server that is different from the first IP address.

5. The method of Claim 2, wherein the first connection request comprises a SYN+MP_CAPABLE message and the multipath connection request comprises a SYN+MP_JOIN message.

6. The method of Claim 5, wherein the SYN+MP_CAPABLE message includes a first token that identifies multipath communications with the client device, and the method further comprises responding to the SYN+MP_CAPABLE message with a SYN/ACK+MP_CAPABLE message that includes a second token that is different from the first token and that identifies multipath communications with the proxy server.

7. The method of Claim 6, wherein the SYN+MP_JOIN message includes the second token and the method further comprises responding to the SYN+MP_ JOIN message with a SYN/ACK+MP_ JOIN message that includes the first token.

8. The method of Claim 1, wherein packets received over the first and second TCP/IP connections between the client device and the proxy server are combined for communication over the single path TCP/IP connection between the proxy server and the serving node.

9. The method of Claim 1, further comprising sending a multipath connection request from the proxy server to the client device, the multipath connection request requesting the second TCP/IP connection with the client device, wherein the second TCP/IP connection is established in response to the multipath connection request from the proxy server.

10. A proxy server node, comprising:
a communications interface configured to communicate with a client device and with at least one serving node; and
a processor configured to receive a first transmission control protocol/internet protocol (TCP/IP) connection request from the client device, the connection request specifying that the client device is capable of establishing a multi-path TCP/IP connection, configured to establish a single path TCP/IP connection to the serving node in response to receiving the connection request, configured to establish first and second TCP/IP connections with the client device as multi-path TCP/IP sub-flows, and configured to proxy communications between the client device and the serving node over the first and second TCP/IP connections as multipath TCP/IP sub-flows with the client device and the single path TCP/IP connection with the serving node.

11. The proxy server node of Claim 10, wherein the processor is further configured to receive a multipath connection request from the client device, wherein the processor is further configured to establish the second TCP/IP connection in response to the multipath connection request from the client device.

12. The proxy server node of Claim 11, wherein the first connection request specifies a first IP address for the client device and the multipath connection request specifies a second IP address for the client device that is different from the first IP address.

13. The proxy server node of Claim 11, wherein the first connection request is directed to a first IP address for the proxy server node and the multipath connection request is directed to a second IP address for the proxy server node that is different from the first IP address.

14. The proxy server node of Claim 11, wherein the first connection request comprises a SYN+MP_CAPABLE message and the multipath connection request comprises a SYN+MP_JOIN message.

15. The proxy server node of Claim 14, wherein the SYN+MP_CAPABLE message includes a first token that identifies multipath communications with the client device, and the wherein the processor is further configured to respond to the SYN+MP_CAPABLE message with a SYN/ACK+MP_CAPABLE message that includes a second token that is different from the first token and that identifies multipath communications with the proxy server node.

16. The proxy server node of Claim 15, wherein the SYN+MP_JOIN message includes the second token and wherein the processor is further configured to respond to the SYN+MP_ JOIN message with a SYN/ACK+MP_JOIN message that includes the first token.

17. The proxy server node of Claim 10, wherein the processor is further configured to combine packets received over the first and second TCP/IP connections between the client device and the proxy server node for communication over the single path TCP/IP connection between the proxy server node and the serving node.

18. The proxy server node of Claim 10, wherein the processor is further configured to send a multipath connection request to the client device, the multipath connection request requesting the second TCP/IP connection with the client device.

19. A computer program product for providing multi-path proxy services, the computer program product comprising:
a tangible computer readable storage medium having computer readable program code embodied in the medium, the computer readable program code comprising:
computer readable program code configured to receive a first transmission control protocol/internet protocol (TCP/IP) connection request from a client device at a proxy server, the connection request specifying that the client device is capable of establishing a multi-path TCP/IP connection;
computer readable program code configured to establish a single path TCP/IP connection from the proxy server to a serving node in response to receiving the connection request;
computer readable program code configured to establish first and second TCP/IP connections between the proxy server and the client device as multi-path TCP/IP sub-flows between the proxy server and the client device; and
computer readable program code configured to proxy communications between the client device and the serving node over the first and second TCP/IP connections as multipath TCP/IP sub-flows between the client device and the proxy server and the single path TCP/lP connection between the proxy server and the serving node.
